Europäisches Patentamt

European Patent Office

Office européen des brevets

(19)

(11) Numéro de publication : **0 029 398**

**B1**

(12)

# FASCICULE DE BREVET EUROPÉEN

(45) Date de publication du fascicule du brevet :
18.01.84

(21) Numéro de dépôt : 80401665.7

(22) Date de dépôt : 20.11.80

(51) Int. Cl.³ : **B 60 T   8/18**

(54) **Dispositif de commande d'un correcteur de freinage pour véhicule automobile.**

(30) Priorité : 20.11.79 FR 7928582

(43) Date de publication de la demande :
27.05.81 Bulletin 81/21

(45) Mention de la délivrance du brevet :
18.01.84 Bulletin 84/03

(84) Etats contractants désignés :
DE GB IT

(56) Documents cités :
DE-A- 1 946 102
FR-A- 2 112 043
US-A- 3 285 673

(73) Titulaire : **SOCIETE ANONYME D.B.A.**
**Centre Paris Pleyel**
**F-93521 St-Denis Cedex 01 (FR)**

(72) Inventeur : **Perrin, Alain**
**10, rue de la République**
**F-93000 Bobigny (FR)**

(74) Mandataire : **Poidatz, Emmanuel et al**
**Service Brevets Bendix 44 rue François 1er**
**F-75008 Paris (FR)**

EP 0 029 398 B1

Jouve, 18, rue St-Denis, 75001 Paris, France

Dispositif de commande d'un correcteur de freinage pour véhicule automobile

L'invention concerne un dispositif de commande d'un correcteur de freinage pour véhicule automobile.

Pour diminuer le risque de blocage de roues arrière d'un véhicule automobile lors du freinage, il est courant d'incorporer dans les circuits de freinage des correcteurs destinés à corriger la pression du liquide de freinage admis aux moteurs de frein associés à ces roues arrière. Notamment, certains correcteurs, qui peuvent être aussi bien du type hydraulique que pneumatique, assurent soit une limitation de la pression de sortie soit une limitation de l'accroissement de cette dernière à partir d'une pression d'entrée prédéterminée, dite pression de transition.

Il est également connu d'asservir le fonctionnement de tels correcteurs à l'état de la charge supportée par les roues arrière du véhicule, au moyen de dispositifs de commande comprenant en général des éléments rigides et au moins un élément élastique interposés entre des parties suspendue et non suspendue du véhicule.

Afin de garantir un freinage efficace du véhicule, en premier lieu, on procède au réglage du correcteur et de son dispositif de commande dans des conditions équivalentes à un état de charge prédéterminé du véhicule, de manière à obtenir une pression de transition prédéterminée pour le correcteur, puis, en second lieu, on monte le correcteur et son dispositif de commande sur le véhicule soumis à cet état de charge prédéterminé, la procédure de montage permettant de respecter les conditions de réglage.

Le problème technique sousjacent à l'invention a pour origine la constatation suivante : Au début de la période d'utilisation du véhicule, correspondant sensiblement à la période durant laquelle le véhicule neuf parcourt sa première centaine de kilomètres, il se produit un certain « tassement » de son système de suspension, dont la conséquence première est un déréglage permanent du dispositif de commande et du correcteur, ces derniers se comportant alors comme si le véhicule supportait une charge supplémentaire, le correcteur permettant l'admission aux moteurs de frein arrière de liquide de freinage sous une pression plus élevée.

Dans le document FR-A-2 112 043, il est proposé de prévoir que l'un des éléments du dispositif de commande soit réalisé sous la forme d'une biellette de longueur réglable, permettant, lors d'un contrôle du véhicule, de compenser le tassage de la suspension en réglant à nouveau la longueur de la biellette.

L'inconvénient d'un tel système est de conditionner une telle compensation à une intervention sur le véhicule.

Le principal objet de la présente invention est donc d'associer au dispositif de commande du correcteur des moyens capables de rétablir le réglage correct du correcteur après ce « tassement » de la suspension du véhicule, sans intervention sur le véhicule.

A cet effet, il est proposé un dispositif de commande d'un correcteur de freinage pour véhicule automobile, composé d'un premier élément rigide relié à une partie non suspendue du véhicule, d'un deuxième élément rigide relié à une partie suspendue du véhicule et agissant sur un organe d'actionnement dudit correcteur, d'un troisième élément rigide reliant le premier élément rigide au second et d'un élément élastique principal, de telle sorte que ledit dispositif applique audit organe d'actionnement une force de commande variable en fonction de la position relative desdites parties suspendue et non suspendue, caractérisé en ce que ledit élément élastique principal est monté entre le deuxième et le troisième éléments rigides par l'intermédiaire d'un système de réglage, des premiers moyens étant prévus pour pouvoir bloquer temporairement ledit élément élastique principal de façon à le maintenir sous une contrainte prédéterminée et des seconds moyens étant prévus pour établir un jeu relatif prédéterminé entre le premier et le troisième éléments rigides.

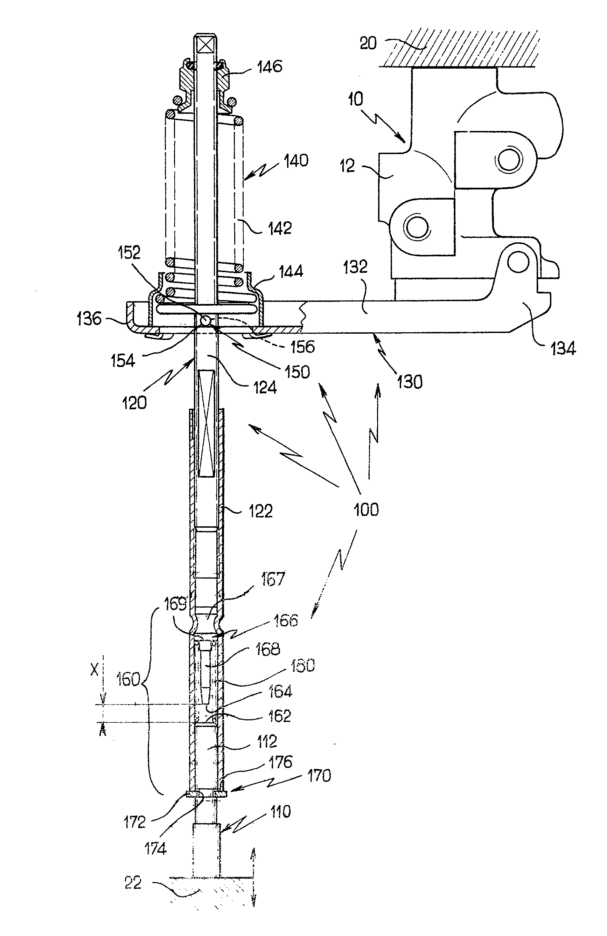

L'invention sera maintenant décrite en se référant à la figure unique des dessins qui est une vue de côté et en coupe partielle d'un dispositif de commande selon l'invention, associé à un correcteur de freinage.

Si l'on considère la figure, un dispositif de commande désigné par la référence générale 100 est associé à un correcteur 10.

A titre d'exemple non limitatif, le correcteur comprend un boîtier 12 prévu pour être monté, par exemple, sur une partie suspendue désignée par la référence 20 d'un véhicule non représenté, de plus, le correcteur comporte un piston ou un organe d'actionnement, monté coulissant dans le boîtier et se prolongeant hors de ce dernier, qui commande une valve interposée entre un orifice d'entrée, prévu pour être relié à une source de fluide sous pression telle qu'une chambre de travail d'un maître-cylindre, et un orifice de sortie, prévu pour être relié à un circuit de service tel qu'un circuit desservant des moteurs de frein associés aux roues arrière du véhicule. Les éléments constitutifs du correcteur qui viennent d'être décrits n'ont pas été représentés à la figure. Lorsque le correcteur et son dispositif de commande sont montés sur le véhicule, la pression régnant à son orifice de sortie évolue en fonction de la pression régnant à son orifice d'entrée et de la force de commande que le dispositif de commande exerce sur la partie de l'organe d'actionnement qui se prolonge hors du boîtier.

Le dispositif 100 comprend, en premier lieu, un premier élément rigide 110, un second élément rigide 130, un troisième élément rigide 120 et un élément élastique principal 140.

Le premier élément rigide 110 comporte une partie 112 ayant sensiblement la forme d'une tige, à l'une de ses extrémités, et son autre extrémité comporte un moyen de raccordement, non représenté, à une partie non suspendue désignée par la référence 22, du véhicule.

Le second élément rigide 130 consiste en un levier 132 monté pivotant, à son extrémité 134, sur le boîtier 12. On constatera que, du fait que le boîtier est destiné à être monté sur la partie suspendue 20 du véhicule, le montage pivotant du levier 132 sur le boîtier 12 constitue un moyen de raccordement du levier 132 à la partie suspendue 20 du véhicule.

Le troisième élément rigide 120 comporte une partie en forme de fourreau 122 montée par une liaison filetée sur une partie en forme de tige 124 et recevant en coulissement la partie en forme de tige 112 du premier élément rigide 110.

L'élément élastique principal 140 consiste en un ressort hélicoïdal 142 fixé d'une part à l'extrémité libre 136 du levier 132 par l'intermédiaire d'une coupelle 144 et d'autre part à un écrou 146 vissé sur la partie en forme de tige 124 du troisième élément rigide 120.

Le dispositif 100 comprend en second lieu un moyen de blocage 150 de l'élément élastique principal 140 pour maintenir celui-ci sous une contrainte prédéterminée. Ce moyen de blocage consiste en une goupille amovible 152, reçue dans deux perçages correspondants 154 et 156 ménagés respectivement dans la partie en forme de tige 124 du troisième élément rigide 120 et dans l'extrémité 136 du levier 132.

Le dispositif 100 comprend en troisième lieu des moyens 160 pour établir un jeu relatif prédéterminé entre l'élément rigide 110 et l'élément rigide 120 pour une position relative de référence des moyens de raccordement cités ci-avant.

Ces moyens 160 comprennent d'une part une première surface de butée 162 définie à l'extrémité de la partie en forme de tige 112 du premier élément rigide 110 et une seconde surface de butée 164 définie sur un noyau 166 fixé à l'intérieur de la partie en forme de fourreau 122 du troisième élément rigide 120, un jeu relatif étant défini entre les première et seconde surfaces de butée 162 et 164, et d'autre part un moyen de repère 170 permettant de contrôler la position relative en coulissement du premier élément rigide 110 par rapport au troisième élément rigide 120 et, par voie de conséquence, de fixer une valeur prédéterminée X à ce jeu relatif. Dans le mode de réalisation illustré à la figure, ce moyen de repère 170 consiste en un anneau de butée 172, amovible, reçu dans une gorge périphérique 174 de ladite partie en forme de tige 112 du premier élément rigide 110, et contre lequel l'extrémité 176 de la partie en forme de fourreau 122 est susceptible de venir en butée.

Enfin, le dispositif 100 comprend un élément élastique auxiliaire ou ressort 180, associé aux deux éléments rigides 110 et 120 pour solliciter ces derniers dans une direction tendant à augmenter le jeu relatif séparant les surfaces de butée 162 et 164. Comme représenté, le noyau 166 est composé d'un corps 167, serti à l'intérieur de la partie en forme de fourreau 122, et d'un prolongement 168, de diamètre réduit et à l'extrémité duquel est définie la seconde surface de butée 164, séparés par un épaulement 169. Le ressort 180 est reçu à l'intérieur de la partie en forme de fourreau 122 et entoure le prolongement 168, il prend appui d'une part sur la première surface de butée 162 et d'autre part sur l'épaulement 169.

Le réglage et le montage du correcteur 10 et du dispositif 100 s'effectuent de la manière suivante :

En premier lieu, on procède au réglage de la contrainte du ressort hélicoïdal 142 de telle manière que le correcteur présente une pression de transition prédéterminée. Pour ce faire, le boîtier 12 est fixé sur un banc, le levier 132, la tige 124 et le ressort 142 étant fixés au correcteur, la goupille 152 immobilisant la tige 124 par rapport au levier 132. La tige 124 est alors repoussée de telle sorte que le levier 132 repousse l'organe d'actionnement du correcteur en butée dans le boîtier dans une position dans laquelle la valve du correcteur est ouverte. La tige 124 est alors immobilisée dans cette position et la goupille 152 démontée.

Le correcteur est alors alimenté en fluide sous pression, des appareils convenables permettant de mesurer la pression à l'orifice d'entrée ainsi qu'à l'orifice de sortie. On procède alors au réglage de la contrainte (dans le cas présent, de la tension) du ressort 142, de manière à obtenir pour le correcteur une pression de transition prédéterminée. Lorsque cette contrainte ainsi prédéterminée du ressort 142 est atteinte, l'écrou 146 est alors bloqué en position par rapport à la tige 124, la pression d'alimentation du correcteur est relâchée et la goupille 152 réintroduite dans les perçages 154 et 156 de la tige et du levier, afin de maintenir le ressort 142 sous cet état de contrainte prédéterminée. Le boîtier 12 et la tige 124 sont alors démontés du banc de réglage et l'on procède à l'assemblage final du dispositif 100 : le fourreau 122 est vissé à fond sur la tige 124 puis, la partie en forme de tige 112 est emboîtée dans le fourreau 122, le ressort annexe 180 et l'anneau de butée 172 étant en place comme représenté à la figure.

En second lieu, on procède au montage du correcteur 10 et du dispositif 100 sur le véhicule. Le boîtier 12 est fixé sur la partie suspendue 20 du véhicule et l'élément rigide 110 est fixé, par l'intermédiaire du moyen de raccordement, non représenté, à la partie non suspendue 22 du véhicule. La partie en forme de fourreau 122 est alors positionnée, par rapport à la partie en forme de tige 124, de manière à ce que son extrémité 176 vienne en contact avec l'anneau de butée 172. Il existe alors entre les deux surfaces de butée 162 et 164 un jeu relatif prédéterminé X. La partie en forme de fourreau 122 est ensuite bloquée, par exemple par écrasement, par rapport à la partie en forme de tige 124. Enfin, l'anneau de butée 172 et la goupille 152 sont démontés.

Lors du démontage de la goupille 152, on remarquera que l'écrou 146, la tige 124, le fourreau 122 et le noyau 166 sont déplacés vers le bas d'une distance au plus égale à X, jusqu'à atteindre une position d'équilibre, fonction des raideurs et des précontraintes respectives du ressort principal 140 et du ressort annexe 180. En conséquence, la contrainte du ressort 142 diminue et il en résulte que le correcteur présente temporairement une pression de transition inférieure à celle qui a été obtenue lors de son réglage.

Le correcteur 10 et son dispositif de commande 100 ainsi montés sur le véhicule, sont alors opérationnels, toute variation de l'état de charge du véhicule se traduisant par une variation de la position relative des parties suspendue 20 et non suspendue 22 du véhicule (en l'occurrence, dans l'exemple illustré, cette variation de position relative consiste approximativement en une translation de la partie non suspendue 22 dans la direction de l'axe commun des tiges 112 et 124, cette translation étant symbolisée par la double flèche à la figure) qui entraîne un déplacement longitudinal des tiges 112 et 124 et une modification de la contrainte du ressort 142 dont il résulte, comme bien connu, une variation de la pression de transition du correcteur.

Avant d'étudier le comportement du correcteur et de son dispositif de commande au cours de la vie du véhicule, il sera utile de rappeler que, le correcteur et son dispositif de commande étant en général montés sur le véhicule à la fin de la chaîne d'assemblage, l'état de la charge du véhicule au moment du montage est donc en général l'état de charge dit « à vide », pour lequel les parties suspendue 20 et non suspendue 22 et, par conséquent, les moyens de raccordement de l'élément rigide 110 et du levier 132, occupent une position relative dite de référence. La pression de transition prédéterminée du correcteur à laquelle il a été fait référence lors de la description du processus de réglage de la contrainte du ressort principal 142 est celle qui est désirée lorsque le véhicule circule « à vide ».

On comprendra que d'autres dispositions peuvent être prises, le véhicule étant par exemple préchargé lors du montage du correcteur et de son dispositif de commande et la contrainte du ressort étant réglée de telle sorte que le correcteur présente une pression de transition prédéterminée, différente de celle qui a été évoquée auparavant, correspondant à cet état de précharge du véhicule, dont les parties suspendue et non suspendue occupent une nouvelle position relative de référence.

Une fois que le véhicule (à état de charge égal) a parcouru une certaine distance, de l'ordre d'une centaine de kilomètres, son système de suspension présente un « tassement » qui se traduit par une modification, de caractère permanent, de la position relative des parties suspendue 20 et non suspendue 22, soit, dans l'exemple choisi, un déplacement assimilable à une translation d'amplitude X du point de fixation de la tige 112, sensiblement dans la direction de l'axe commun des deux tiges et vers le haut si l'on considère la figure.

La tige 112 se trouve par conséquent déplacée de cette même distance X, vers le haut. Au cours de ce déplacement, le ressort 180 subit une compression supplémentaire, qu'il transmet à travers le fourreau 122, à la tige 124 qui se déplace alors vers le haut en provoquant une augmentation de la contrainte du ressort 142, la tige 124 et le fourreau 122 se stabilisant dans une position d'équilibre fonction des raideurs et des précontraintes respectives des deux ressorts. On notera que le choix de ces caractéristiques des deux ressorts est tel que les surfaces de butée 162 et 164 soient en contact mutuel au plus tard lorsque la tige 112 s'est déplacée vers le haut de la distance X.

Dans cette situation, la tige 124 occupe vis-à-vis du levier 132 sensiblement la même position qu'elle occupait lors du réglage évoqué plus haut. La pression de transition réelle du correcteur est alors pratiquement identique à la pression de transition prédéterminée.

En résumé, lorsque le « tassement » de la suspension du véhicule est intervenu, le réglage du correcteur et de son dispositif de commande est pratiquement identique à celui qui a été obtenu sur le banc de réglage.

Lors du fonctionnement ultérieur du véhicule, les tiges 112 et 124 se déplacent alors comme un tout, comme si le ressort annexe 180 n'existait plus. Ce dernier conserve toutefois un rôle dans quelques cas exceptionnels : il peut en effet se produire, lors de certains freinages, un déplacement d'amplitude exceptionnelle de la tige 112 vers le bas, dû à un accroissement exceptionnel de la distance entre les parties suspendue et non suspendue du véhicule, qui risquerait de faire décroître la contrainte du ressort 142 jusqu'à zéro. Le ressort annexe 180 permet dans ce cas de maintenir l'ensemble du dispositif de commande sous une contrainte résiduelle, de sorte que le correcteur 10 présente une pression de transition résiduelle, différente à zéro.

Ce rôle du ressort annexe s'applique également lors de la période durant laquelle le véhicule parcourt la distance nécessaire au « tassement » de sa suspension.

On remarquera par ailleurs que le ressort 180 peut être supprimé sans sortir du cadre de l'invention. En effet, le ressort principal 142 peut être sélectionné de manière à présenter une contrainte non nulle lorsque, après suppression de la goupille 152 à la fin des opérations de montage, la tige 124 est repoussée d'une distance X vers le bas, les surfaces de butée 162 et 164 venant en contact mutuel dès la mise en service du véhicule.

On comprendra également que l'invention ne se limite pas au mode de réalisation décrit et s'étend en particulier aux variantes non représentées qui présentent une des caractéristiques suivantes :

— Le boîtier 12 est fixé à la partie non suspendue 22 et la tige 112 à la partie suspendue 20 du véhicule.

— Le ressort « de traction » 142 est remplacé par un ressort du type « à compression », le terme « contrainte » employé dans la description qui précède pouvant être employé pour exprimer la force développée par un ressort aussi bien tendu que comprimé.

— Les éléments rigides 110 et 120 qui coopèrent mutuellement par poussée sont remplacés par des éléments coopérant par traction. En particulier, la tige 112 peut comporter une tête élargie sur laquelle est définie une surface de butée postérieure et le fourreau 122 peut comporter un rétrécissement à son extrémité, sur lequel est définie une surface de butée correspondante, également postérieure.

## Revendications

1. Dispositif de commande (100) d'un correcteur de freinage (10) pour véhicule automobile, composé d'un premier élément rigide (110) relié à une partie non suspendue (22) du véhicule, d'un deuxième élément rigide (130) relié à une partie suspendue (20) du véhicule et agissant sur un organe d'actionnement dudit correcteur (10), d'un troisième élément rigide (120) reliant le premier élément rigide (110) au second (130) et d'un élément élastique principal (140), de telle sorte que ledit dispositif (100) applique audit organe d'actionnement une force de commande variable en fonction de la position relative desdites parties suspendue (20) et non suspendue (22), caractérisé en ce que ledit élément élastique principal (110) est monté entre le deuxième (130) et le troisième (120) éléments rigides par l'intermédiaire d'un système de réglage (146), des premiers moyens (150) étant prévus pour pouvoir bloquer temporairement ledit élément élastique principal (140) de façon à le maintenir sous une contrainte prédéterminée et des seconds moyens (170) étant prévus pour établir un jeu relatif prédéterminé (X) entre le premier (110) et le troisième (120) éléments rigides.

2. Dispositif selon la revendication 1, caractérisé en ce que le premier élément rigide (110) comporte une partie en forme de tige (112), sur laquelle est définie une première surface de butée (162), le troisième élément rigide (120) comportant une partie en forme de fourreau (122) recevant en coulissement ladite partie en forme de tige (112), sur lequel est définie une seconde surface de butée (164), le jeu relatif précité (X) étant défini entre lesdites première (162) et seconde (164) surfaces de butée, et qu'un moyen de repère (170) est prévu pour contrôler la position relative en coulissement de ces deux éléments rigides (110, 120).

3. Dispositif selon la revendication 2, caractérisé en ce que ledit troisième élément rigide (120) comporte une partie en forme de tige (124) sur laquelle ladite partie en forme de fourreau (122) est montée par une liaison filetée permettant de faire varier le jeu relatif précité (X).

4. Dispositif selon l'une ou l'autre des revendications 2 et 3, caractérisé en ce que ledit moyen de repère (170) est matérialisé par un anneau de butée (172) amovible, reçu dans une gorge (174) périphérique de ladite partie en forme de tige (112) du premier élément rigide (110) et contre lequel ladite partie en forme de fourreau (122) est susceptible de venir en butée.

5. Dispositif selon l'une quelconque des revendications 2 à 4, caractérisé en ce que ladite seconde surface de butée (164) est définie sur un noyau (166) fixé à l'intérieur de ladite partie en forme de fourreau (122) et que ladite première surface de butée (162) est définie à l'extrémité de ladite partie en forme de tige (112) du premier élément rigide (110).

6. Dispositif selon l'une quelconque des revendications 1 à 5, caractérisé en ce qu'il comprend un élément élastique auxiliaire (180) associé aux premier et troisième éléments rigides précités pour solliciter ces derniers dans une direction tendant à augmenter ledit jeu relatif (X).

7. Dispositif selon la revendication 6, prise en combinaison avec la revendication 5, caractérisé en ce que ledit élément élastique auxiliaire (180) est reçu dans ladite partie en forme de fourreau (122) et interposé entre ledit noyau (166) et ladite partie en forme de tige (112) du premier élément rigide (110).

8. Dispositif selon la revendication 7, caractérisé en ce que ledit noyau (166) est composé d'un corps, serti à l'intérieur de ladite partie en forme de fourreau (122), et d'un prolongement de diamètre réduit (168), à l'extrémité duquel est définie ladite seconde surface de butée (164) séparés par un épaulement (169), ledit élément élastique auxiliaire entourant ledit prolongement (168) et prenant appui sur ledit épaulement (169).

9. Dispositif selon l'une quelconque des revendications 1 à 8, caractérisé en ce que ledit élément élastique principal (140) consiste en un ressort hélicoïdal fixé à l'une de ses extrémités au second élément rigide (130) et à l'autre extrémité au troisième élément rigide (120), lesdits premiers moyens (150) étant montés entre le second (130) et le troisième (120) éléments rigides pour empêcher sensiblement tout débattement entre eux.

10. Dispositif selon la revendication 9, caractérisé en ce que lesdits premiers moyens consistent en une goupille (152) introduite dans un perçage (154), sensiblement perpendiculaire à l'axe du ressort hélicoïdal (140), dudit troisième (120) élément rigide et dans un perçage (156) correspondant du second élément rigide (130).

## Claims

1. A braking corrector (10) control device (100) for an automotive vehicle, comprising a first rigid element (110) connected to an unsprung portion (22) of the vehicle, a second rigid element (130) connected to a sprung portion (20) of the vehicle and acting on an operating member of said corrector (10), a third rigid element (120) connecting the first rigid element (110) to the second rigid element (130), and a principal elastic element (140), the arrangement being such that said control device (100) will exert on said operating member a control force varying as a function of the relative position of said sprung (20) and unsprung (22) portions, characterized in that the principal elastic element (110) is mounted between the second (130) and third (120) rigid elements by intermediary of an adjusting mechanism (146), first means (150) being provided to temporarily block the principal elastic element (140) such that a predetermined bias is maintained, second means (170) being provided to establish predetermined play (X) between the first (110) and third (120) rigid elements.

2. A control device as in claim 1, characterized in that the first rigid element (110) comprises a rod shaped portion (112), a first abutment surface (162) being formed on the latter, in that the third rigid element (120) has a sleeve shaped portion (122) slidably receiving said rod-shaped portion (112), a second abutment surface (164) being carried by said sleeve shaped portion (122), said relative play (X) being defined between said first (162) and second (164) abutment surfaces, and in that marking means (170) are provided for controlling the relative position in sliding of the two rigid elements (110, 120).

3. A control device as in claim 2, characterized in that the third rigid element (120) comprises a rod shaped portion (124) on which said sleeve shaped portion (122) is mounted by means of a threading connection allowing to vary said relative play (X.)

4. A control device as in claim 2 or 3, characterized in that said mark means (170) is formed by a fixed abutment ring (172) engaging in a peripheral groove (174) of said rod shaped portion (112) of the first rigid element (110), said sleeve shaped portion (122) being adapted to engage said abutment ring (172).

5. A control device as in one of claims 2 to 4, characterized in that said second abutment surface (164) is formed on a core member (166) fixedly connected to the interior of said sleeve shaped portion (122), and in that said first abutment surface (162) is defined at the end of said rod shaped portion (112) of the first rigid element (110).

6. A control device as in one of claims 1 to 5, characterized in that it comprises an auxiliary elastic element (180) associated to said first and third rigid elements to bias the latter in a direction which will result in an increase of said relative play (X).

7. A control device as in claim 6 in combination with claim 5, characterized in that said auxiliary elastic element (180) is arranged within said sleeve shaped portion (122) being interposed between said core member (166) and said rod shaped portion (112) of the first rigid element (110).

8. A control device as in claim 7, characterized in that said core member (166) is formed by a body inserted into the interior of said sleeve shaped portion (122) as well as of a reduced diameter extension (168), the second abutment surface being defined at the end of the latter, a shoulder (169) being defined between said body and said extension, the auxiliary elastic element surrounding said extension (168) and being supported from said shoulder (169).

9. A control device as in one of claims 1 to 8, characterized in that the principal elastic element (140) is formed by a helical spring, one end of which is connected to the second rigid element (130), the second end thereof being connected to the third rigid element (120), said first means (150) being mounted between said second (130) and third (120) rigid elements to avoid essentially all play there-between.

10. A control device as in claim 9, characterized in that said first means are formed by a pin (152) inserted into a bore (154) of said third rigid element (120) and into a corresponding bore (156) of the second rigid element (130), said first bore (154) essentially extending in a direction perpendicular to the axis of the helical spring (140).

**Ansprüche**

1. Steuerungsvorrichtung (100) eines Bremskraftreglers (10) für ein Kraftfahrzeug, mit einem ersten starren Element (110), welches mit einem nicht gefederten Teil (22) des Fahrzeuges verbunden ist, mit einem zweiten starren Element (130), welches mit einem gefederten Teil (20) des Fahrzeuges verbunden ist und auf ein Betätigungsglied des Reglers (10) arbeitet, mit einem dritten starren Element (120), durch welches das erste starre Element (110) mit dem zweiten (130) verbunden ist, und mit einem Hauptfederelement (140), wobei die Anordnung so getroffen ist, daß die Vorrichtung (100) auf das Betätigungsglied eine variable Betätigungskraft ausübt, welche von der Relativstellung zwischen gefedertem Teil (20) und nicht gefedertem Teil (22) abhängt, dadurch gekennzeichnet, daß das Hauptfederelement (110) zwischen dem zweiten starren Element (130) und dem dritten starren Element (120) unter Zwischenschaltung eines Einstellsystems (146) angebracht ist, daß erste Mittel (150) zum vorübergehenden Blockieren des Hauptfederelementes (140) derart vorgesehen sind, daß letzteres unter vorgegebener Vorspannung gehalten wird, und zweite Mittel (170) vorgesehen sind, um ein vorgegebenes Relativspiel (X) zwischen dem ersten starren Element (110) und dem dritten starren Element (120) zu gewährleisten.

2. Steuerungsvorrichtung nach Anspruch 1, dadurch gekennzeichnet, daß das erste starre Element (110) einen stangenförmigen Abschnitt (112) hat, auf welchem eine erste Anschlagfläche (162) ausgebildet ist, daß das dritte starre Element (120) einen hülsenförmigen Abschnitt (122) hat, in welchem der stangenförmige Abschnitt (112) gleitend Aufnahme findet und auf welchem eine zweite Anschlagfläche (164) ausgebildet ist, wobei das vorgegebene Relativspiel (X) durch den Abstand zwischen der ersten Anschlagfläche (162) und der zweiten Anschlagfläche (164) vorgegeben ist, und daß eine Marke (170) vorgesehen ist, um die Relativstellung bei der Verschiebung dieser beiden starren Elemente (110, 120) zu kontrollieren.

3. Steuerungsvorrichtung nach Anspruch 2, dadurch gekennzeichnet, daß das dritte starre Element (120) einen stabförmigen Abschnitt (124) aufweist, auf welcher der hülsenförmige Abschnitt (122) über eine Gewindeverbindung angeordnet ist, so daß das Relativspiel (X) geändert werden kann.

4. Steuerungsvorrichtung nach Anspruch 2 oder 3, dadurch gekennzeichnet, daß die Marke (170) durch einen unbeweglichen Anschlagring (172) gebildet ist, welcher in einer Umfangsnut (174) des stangenförmigen Abschnitts (112) des ersten starren Elementes (110) Aufnahme findet und gegen welchen der hülsenförmige Abschnitt (122) in Anlage kommen kann.

5. Steuerungsvorrichtung nach einem der Ansprüche 2 bis 4, dadurch gekennzeichnet, daß die zweite Anschlagfläche (164) auf einem Kern (166) ausgebildet ist, der im Inneren des hülsenförmigen Teils (122) befestigt ist, und daß die erste Anschlagfläche (162) am Ende des stabförmigen Abschnittes (112) des ersten starren Elementes (110) liegt.

6. Steuerungsvorrichtung nach einem der Ansprüche 1 bis 5, dadurch gekennzeichnet, daß dem ersten und dem dritten starren Element eine Hilfsfeder (180) zugeordnet ist, durch welche diese starren Elemente in Richtung einer Vergrößerung des Relativspiels (X) vorgespannt sind.

7. Steuerungsvorrichtung nach Anspruch 6 in Verbindung mit Anspruch 5, dadurch gekennzeichnet daß die Hilfsfeder (180) in dem hülsenförmigen Abschnitt (122) Aufnahme findet und zwischen dem Kern (166) und dem stabförmigen Abschnitt (112) des ersten starren Elementes (110) liegt.

8. Steuerungsvorrichtung nach Anspruch 7, dadurch gekennzeichnet, daß der Kern (166) durch einen in den Innenraum des hülsenförmigen Abschnittes (122) eingesetzten Körper und durch eine verminderten Durchmesser aufweisende Verlängerung (168) gebildet ist, an deren Ende die zweite Anschlagfläche (164) liegt, wobei dazwischen eine Schulter (169) liegt, und daß die Hilfsfeder die Verlängerung (168) umgibt und an der Schulter (169) abgestützt ist.

9. Steuerungsvorrichtung nach einem der Ansprüche 1 bis 8, dadurch gekennzeichnet, daß das Hauptfederelement (140) durch eine Schraubenfeder gebildet ist, welche an einem ihrer Enden an dem zweiten starren Element (130) und an ihrem anderen Ende am dritten starren Element (120) befestigt ist, und daß die ersten Mittel (150) zwischen dem zweiten starren Element (130) und dem dritten starren Element (120) angeordnet sind, so daß sie im wesentlichen jegliches Bewegen dieser Teil gegeneinander verhindern.

10. Steuerungsvorrichtung nach Anspruch 9, dadurch gekennzeichnet, daß die ersten Mittel durch einen Stift (152) gebildet sind, der in eine Bohrung (154) des dritten starren Elementes (120) eingeführt ist, welche im wesentlichen senkrecht zur Achse der Schraubenfeder (140) verläuft, und welcher zugleich eine entsprechende Bohrung (156) des zweiten starren Elementes (130) durchsetzt.